# EUROPÄISCHE PATENTSCHRIFT

(11) **EP 0 749 357 B1**
(45) Veröffentlichungstag und Bekanntmachung des Hinweises auf die Patenterteilung: **20.05.1998**
(21) Anmeldenummer: 95908238.9
(22) Anmeldetag: 01.02.1995
(51) Int. Cl.: B04B 9/12, F16N 7/36, F16C 33/66

(54) **ANTRIEB FÜR EINE ZENTRIFUGENTROMMEL**
CENTRIFUGE DRUM DRIVE
ENTRAINEMENT POUR TAMBOURS DE CENTRIFUGEUSES

(30) Priorität: 11.03.1994 DE 4408182
(43) Veröffentlichungstag der Anmeldung: 27.12.1996
(73) Patentinhaber: Westfalia Separator AG, 59302 Oelde (DE)
(72) Erfinder: DROSTE, Johannes, D-59302 Oelde (DE); MACKEL, Wilfried, D-59302 Oelde (DE); RUWE, Markus, D-33739 Bielefeld (DE)
(86) Internationale Anmeldenummer: EP9500349
(87) Internationale Veröffentlichungsnummer: WO9524271

(56) Entgegenhaltungen:
- EP-A- 0 215 585
- WO-A-89/10794
- DE-A- 3 543 669
- DE-B- 1 069 431
- DE-B- 1 089 506
- DE-C- 343 420
- GB-A- 627 166

## Beschreibung

Die Erfindung bezieht sich auf einen Antrieb für eine Zentrifugentrommel, die am oberen Ende einer vertikalen Antriebsspindel vorgesehen ist, die in einem Gehäuse in einer oberen Lagerstelle und einer unteren Lagerstelle rotierbar angeordnet und durch einen Treibriemen und eine mit der Antriebsspindel verbundene Riemenscheibe antreibbar ist, wobei die Schmierung der oberen Lagerstelle von einem zentralen Ölbad durch Erzeugung eines Ölnebels erfolgt.

Ein derartiger Antrieb ist beispielsweise bekannt aus der EP 0 215 585 B1, wobei die Riemenscheibe unterhalb der unteren Lagerstelle und unterhalb des Ölbades vorgesehen ist. Die Ölversorgung beider Lagerstellen wird durch ein rotierendes Element bewirkt, das unterhalb der unteren Lagerstelle mit der Antriebsspindel verbunden ist und in das Ölbad eintaucht. Der dadurch bewirkte Ölnebel muß zunächst die untere Lagerstelle durchdringen bevor er zu der oberen Lagerstelle gelangen kann. Die Versorgung der oberen Lagerstelle mit Öl kann dadurch beeinträchtigt sein. Bei dem bekannten Antrieb durchdringt die rotierende Antriebsspindel den Boden des ortsfesten Ölbades mit dem erforderlichen radialen Abstand, wodurch ein Verbindungsspalt zur Atmosphäre entsteht. Durch den im Ölbad erzeugten Ölnebel kann es durch diesen Verbindungsspalt zu Ölleckagen kommen, wodurch der unterhalb des Verbindungsspaltes angeordnete Treibriemen und die Keilriemenscheibe in ihrer Funktion beeinträchtigt werden können. Insbesondere bei Einsatz derartiger Antriebe an Bord von Schiffen kann durch die unvermeidlichen Bewegungen des Schiffes das Auftreten von Leckagen begünstigt werden.

Der Erfindung liegt die Aufgabe zugrunde, einen Antrieb zu schaffen, der eine zuverlässige Ölversorgung der Lagerstellen ermöglicht, ohne die Funktion des Antriebes durch Ölleckage zu gefährden.

Diese Aufgabe wird dadurch gelöst, daß die untere Lagerstelle im Ölbad vorgesehen und die Riemenscheibe oberhalb der oberen Lagerstelle mit der Antriebsspindel verbunden ist.

Die untere Lagerstelle erzeugt hierbei den Ölnebel, der somit ungehindert bis zur oberen Lagerstelle gelangen kann. Da die Riemenscheibe oberhalb der oberen Lagerstelle vorgesehen ist, kann das Ölbad zur Unterseite geschlossen ausgeführt werden, so daß eine Leckage an dieser Stelle nicht auftreten kann. Die Gefahr einer Leckage an der oberen Lagerstelle ist wesentlich geringer, da die Intensität des Ölnebels schon stark nachläßt und außerdem die Schwerkraft einer Leckage entgegenwirkt.

Vorteilhafte Ausgestaltungen sind in den Unteransprüchen angegeben.

Bei einer vorteilhaften Ausgestaltung sind die Lagerstellen in einem gemeinsamen Lagergehäuse vorgesehen, das mit dem Gehäuse über mindestens ein elastisches Element verbunden ist, das im Bereich der oberen Lagerstelle als Gelenk wirkt und dadurch eine radiale Auslenkung der unteren Lagerstelle ermöglicht. Das gemeinsame Lagergehäuse ermöglicht einerseits eine besonders intensive Ölversorgung der oberen Lagerstelle und andererseits auf einfache Weise eine Reaktion der Antriebsspindel auf vorhandene Unwuchten des Rotors.

Als elastisches Element kann ein konzentrisch zwischen dem Gehäuse und dem Lagergehäuse vorgesehener Ring dienen, der aus elastischem Material besteht, oder es können als elastische Elemente am Umfang des Lagergehäuses verteilte Gummi/Metall-Lager verwendet werden, die mit dem Gehäuse verbunden sind. Derartige Elemente sind kostengünstig herzustellen oder zu beziehen und können leicht mit der gewünschten Charakteristik versehen werden.

Bei einer weiteren vorteilhaften Ausgestaltung sind zwischen dem Gehäuse und dem Lagergehäuse federnde Elemente vorgesehen, die der radialen Auslenkung der unteren Lagerstelle einen Widerstand entgegensetzen. Diese Elemente dienen zur Abstimmung eines stabilen Laufes der Trommel.

Die federnden Elemente können als Gummilager ausgebildet sein, die im Bereich der oberen Lagerstelle vorgesehen sind. Da derartige Gummilager handelsüblich sind, ergibt sich eine preisgünstige Lösung.

Als federnde Elemente können auch Zylinderfedern im Bereich der unteren Lagerstelle angeordnet sein. Da sich die untere Lagerstelle im Ölbad befindet, treten hierbei besonders niedrige Reibwerte auf. Falls Dämpfelemente wie beispielsweise Reibdämpfer oder hydraulische Dämpfer erforderlich sind, können diese verschleiß- und kostengünstig im Ölbad vorgesehen werden. Eine Begrenzung der Auslenkung des Lagergehäuses kann ebenfalls verschleißarm im Ölbad realisiert werden.

Bei einer weiteren vorteilhaften Ausgestaltung ist die Antriebsspindel oberhalb der unteren Lagerstelle mit einem drehbaren Element versehen, das von der Antriebsspindel angetrieben wird. Das drehbare Element bewirkt eine Verstärkung des durch die untere Lagerstelle erzeugten Ölstromes.

Zur Regulierung des Ölstromes zur oberen Lagerstelle kann das Lagergehäuse mit mindestens einem Ablaufkanal und einem Zulaufkanal versehen sein, die mit dem Ölbad in Verbindung stehen. Je nach Lage und Größe des Ablaufkanals wird ein mehr oder weniger großer Anteil des Ölstromes unmittelbar zum Ölbad zurückgeleitet.

Eine Erhöhung des Ölstromes ist dadurch möglich, daß das drehbare Element auf seiner Oberseite mit einer eine Pumpwirkung erzeugenden Kontur versehen ist.

Ausführungsbeispiele der Erfindung sind in der Zeichnung dargestellt und werden nachstehend näher erläutert. Es zeigt
- Fig. 1: einen Querschnitt durch eine Zentrifuge,
- Fig. 2: einen Querschnitt durch ein Lagergehäuse.

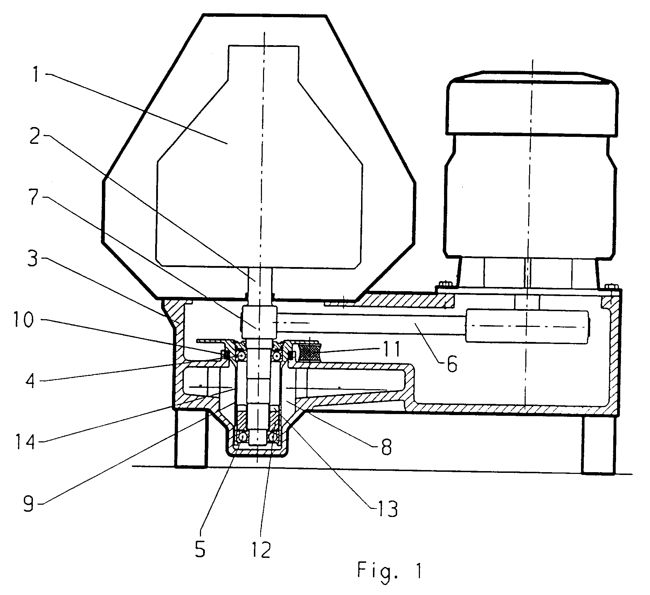

Mit 1 ist in der Fig. 1 die Zentrifugentrommel bezeichnet, die am oberen Ende einer vertikalen Antriebsspindel 2 vorgesehen ist, die in einem Gehäuse 3 in einer oberen Lagerstelle 4 und einer unteren Lagerstelle 5 rotierbar angeordnet und durch einen Treibriemen 6 und eine oberhalb der oberen Lagerstelle 4 vorgesehene Riemenscheibe 7 antreibbar ist. Die untere Lagerstelle 5 ist in einem zentralen Ölbad 8 vorgesehen. Die Lagerstellen 4 und 5 sind in einem gemeinsamen Lagergehäuse 9 angeordnet, das im Bereich der oberen Lagerstelle 4 mit dem Gehäuse 3 über ein elastisches Element 10 verbunden ist. Das elastische Element 10 ist als konzentrischer Ring aus elastischem Material ausgebildet, der zwischen dem Gehäuse 3 und dem Lagergehäuse 9 angeordnet ist. Im Bereich der oberen Lagerstelle 4 sind zwischen dem Gehäuse 3 und dem Lagergehäuse 9 als Gummilager ausgebildete federnde Elemente 11 vorgesehen, die der radialen Auslenkung der unteren Lagerstelle 5 einen Widerstand entgegensetzen. Oberhalb der unteren Lagerstelle 5 ist die Antriebsspindel 2 mit einem drehbaren Element 12 versehen, das von der Antriebsspindel 2 angetrieben wird. Auf der Oberseite des drehbaren Elementes 12 ist eine Kontur 13 vorgesehen, die eine Pumpwirkung erzeugt. Das Lagergehäuse 9 steht über Ablaufkanäle 14 mit dem Ölbad 8 in Verbindung.

Die untere Lagerstelle 5 befindet sich im zentralen Ölbad 8 und erzeugt durch Rotation der Antriebsspindel 2 einen Ölnebel, der durch das rotierende Element 12 verstärkt wird. An der inneren Wandung des Lagergehäuses 9 wandert ein Ölfilm bis zur oberen Lagerstelle 4. Zur Regulierung dieses Ölstromes sind in der Wandung des Lagergehäuses 9 Kanäle 14 vorgesehen, über die ein Teilstrom des Öles vor Erreichen der oberen Lagerstelle 4 in das Ölbad 8 zurückgeleitet wird. Selbst bei einer Leckage an der oberen Lagerstelle 4 besteht keine Gefahr, daß Öl bis zum Treibriemen 6 gelangt, da aufgrund der Schwerkraftwirkung das Lekkageöl zum Boden des Gehäuses 3 fließt. Durch die Verwendung eines konzentrischen Ringes als elastische Element 10 ergibt sich eine konstruktiv einfache Lösung für die erforderliche Ausbildung eines Gelenkes zwischen dem Gehäuse 3 und dem Lagergehäuse 9. Die federnden Elemente 11 wirken der Auslenkung der unteren Lagerstelle 5 entgegen und dienen zur Abstimmung eines stabilen Laufes der Zentrifugentrommel 1.

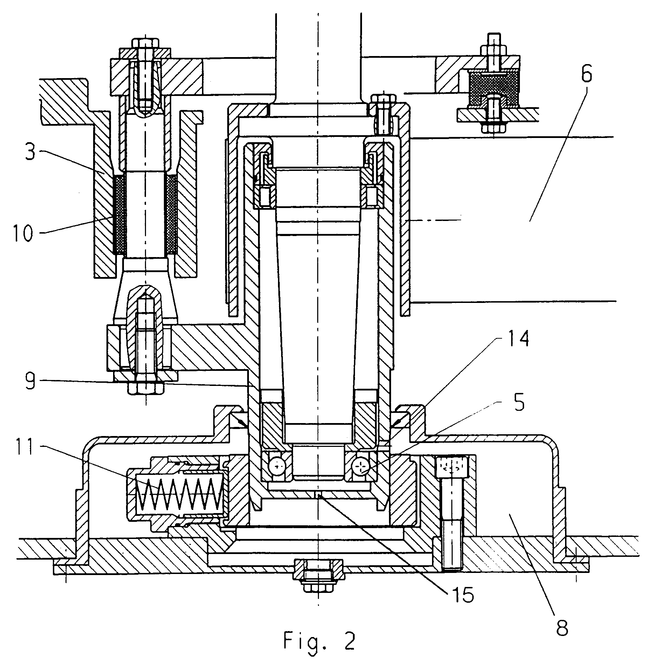

Bei der Ausführung gemäß der Fig. 2 sind mehrere elastische Elemente 10 am Umfang des Lagergehäuses 9 vorgesehen, die mit dem Gehäuse 3 verbunden und als Gummi/Metall-Lager ausgebildet sind. In der horizontalen Mittelebene der elastischen Elemente 10 wird ein Gelenkpunkt zwischen dem Gehäuse 3 und dem Lagergehäuse 9 erzeugt. Durch diese Mittelebene verläuft auch der Treibriemen 6, so daß in Bezug auf den Gelenkpunkt kein Drehmoment erzeugt wird, das eine unerwünschte Auslenkung der unteren Lagerstelle 5 bewirken könnte. Die als Zylinderfedern ausgebildeten federnden Elemente 11, die im Bereich der unteren Lagerstelle 5 angeordnet sind, müssen daher nur die Auslenkungen des Lagergehäuses 9 kompensieren, die durch Unwuchten der Zentrifugentrommel 1 erzeugt werden. Dadurch ist eine besonders vorteilhafte Lagerungsabstimmung möglich. Das Lagergehäuse 9 steht über Ablaufkanäle 14 und einem Zulaufkanal 15 mit dem Ölbad 8 in Verbindung.

## Patentansprüche

1. Antrieb für eine Zentrifugentrommel (1), die am oberen Ende einer vertikalen Antriebsspindel (2) vorgesehen ist, die in einem Gehäuse (3) in einer oberen Lagerstelle (4) und einer unteren Lagerstelle (5) rotierbar angeordnet und durch einen Treibriemen (6) und eine mit der Antriebsspindel (2) verbundene Riemenscheibe (7) antreibbar ist, wobei die Schmierung der oberen Lagerstelle (4) von einem zentralen Ölbad (8) durch Erzeugung eines Ölnebels erfolgt, **dadurch gekennzeichnet**, daß die untere Lagerstelle (5) im Ölbad (8) vorgesehen und die Riemenscheibe (7) oberhalb der oberen Lagerstelle (4) mit der Antriebsspindel (2) verbunden ist.

2. Antrieb nach Anspruch 1, dadurch gekennzeichnet, daß die Lagerstellen (4, 5) in einem gemeinsamen Lagergehäuse (9) vorgesehen sind, das mit dem Gehäuse (3) über mindestens ein elastisches Element (10) verbunden ist, das im Bereich der oberen Lagerstelle (4) als Gelenk wirkt und dadurch eine radiale Auslenkung der unteren Lagerstelle (5) ermöglicht.

3. Antrieb nach Anspruch 1 oder 2, dadurch gekennzeichnet, daß das elastische Element (10) aus einem konzentrisch zwischen dem Gehäuse (3) und dem Lagergehäuse (9) vorgesehenen Ring besteht, der aus elastischem Material besteht.

4. Antrieb nach Anspruch 1 oder 2, dadurch gekennzeichnet, daß mehrere elastische Elemente (10) am Umfang des Lagergehäuses (9) angeordnet sind, die mit dem Gehäuse (3) verbunden sind.

5. Antrieb nach Anspruch 4, dadurch gekennzeichnet, daß als elastische Elemente (10) Gummi/Metall-Lager verwendet werden.

6. Antrieb nach einem der Ansprüche 1 bis 5, dadurch gekennzeichnet, daß zwischen dem Gehäuse (3) und dem Lagergehäuse (9) federnde Elemente (11) vorgesehen sind, die der radialen Auslenkung der unteren Lagerstelle (5) einen Widerstand entgegensetzen.

7. Antrieb nach Anspruch 6, dadurch gekennzeichnet, daß die federnden Elemente (11) als Gummilager ausgebildet sind, die im Bereich der oberen Lagerstelle (4) vorgesehen sind.

8. Antrieb nach Anspruch 6, dadurch gekennzeichnet, daß als federnde Elemente (11) Zylinderfedern im Bereich der unteren Lagerstelle (5) angeordnet sind.

9. Antrieb nach einem der Ansprüche 1 bis 8, dadurch gekennzeichnet, daß die Antriebsspindel (2) oberhalb der unteren Lagerstelle (5) mit einem drehbaren Element (12) versehen ist, das von der Antriebsspindel (2) angetrieben wird.

10. Antrieb nach Anspruch 9, dadurch gekennzeichnet, daß das drehbare Element (12) auf seiner Oberseite mit einer eine Pumpwirkung erzeugenden Kontur (13) versehen ist.

11. Antrieb nach einem der Ansprüche 2 bis 10, dadurch gekennzeichnet, daß das Lagergehäuse mit mindestens einem Ablaufkanal (14) und einem Zulaufkanal (15) versehen ist, die mit dem Ölbad (8) in Verbindung stehen.

## Claims

1. Drive for a centrifuge bowl (1) which is located at the upper end of a vertical drive spindle (2) which is arranged rotatably in a housing (3) in an upper bearing point (4) and a lower bearing point (5) and which can be driven by a drive belt (6) and a belt pulley (7) connected to the drive spindle (2), whereby lubrication of the upper bearing point (4) is from a central oil bath (8) by producing oil mist, **characterised in that** the lower bearing point (5) is situated in the oil bath (8) and the belt pulley (7) is connected to the drive spindle (2) above the upper bearing point (4).

2. Drive according to claim 1, characterised in that the bearing points (4, 5) are situated in a common bearing housing (9) which is connected to housing (3) via at least one elastic element (10) which acts as a joint in the area of the upper bearing point (4), thereby enabling radial excursion of the lower bearing point (5).

3. Drive according to claim 1 or 2, characterised in that the elastic element (10) consists of a concentric ring between the housing (3) and the bearing housing (9), said ring being made of elastic material.

4. Drive according to claim 1 or 2, characterised in that several elastic elements (10) are positioned around the periphery of the bearing housing (9) which are connected to housing (3).

5. Drive according to claim 4, characterised in that rubber/metal cushions are used as elastic elements (10).

6. Drive according to one of the claims 1 to 5, characterised in that springy elements (11) are located between the housing (3) and the bearing housing (9) which provide resistance against the radial excursion of the lower bearing point (5).

7. Drive according to claim 6, characterised in that the springy elements (11) are in the form of rubber cushions situated in the area of the upper bearing point (4).

8. Drive according to claim 6, characterised in that cylindrical springs are used as springy elements (11) in the area of the lower bearing point (5).

9. Drive according to one of the claims 1 to 8, characterised in that the drive spindle (2) is provided with a rotating element (12) above the lower bearing point (5) which is driven by the drive spindle (2).

10. Drive according to claim 9, characterised in that the rotating element (12) is provided with a contour (13) on its top surface which generates a pumping action.

11. Drive according to one of the claims 2 to 10, characterised in that the bearing housing is provided with at least one discharge channel (14) and one feed channel (15) which are connected to the oil bath (8).

## Revendications

1. Entraînement d'un bol centrifuge (1) monté à l'extrémité supérieure d'un arbre de commande (2), disposé de manière rotative dans un bâti (3) et logé dans un palier inférieur (4) et dans un palier supérieur (5), pouvant être entraîné par une courroie de transmission (6) et une poulie à gorges (7) reliée à l'arbre de commande (2), le graissage du palier supérieur (4) étant assuré à partir d'un bain d'huile central (8), par voie de formation d'un brouillard d'huile, **caractérisé en ce que** le palier inférieur (5) est prévu dans le bain d'huile (8) et la poulie à gorges (7) se trouvant au-dessus du palier supérieur (4) est reliée à l'arbre de commande (2).

2. Entraînement suivant revendication 1, caractérisé en ce que les paliers (4, 5) sont logés dans une boîte de palier (9) qui est reliée au bâti (3) par l'intermédiaire d'au moins un élément élastique (10) qui agit en tant qu'articulation dans la zone du roulement supérieur (4), ainsi permettant une déviation radiale du palier inférieur (5).

3. Entraînement selon l'une des revendications 1 ou 2, caractérisé en ce que l'élément élastique (10) est constitué par un anneau en matériau élastique, monté de manière concentrique entre le bâti (3) et la boîte de palier (9).

4. Entraînement selon l'une des revendications 1 ou 2, caractérisé en ce que plusieurs éléments élastiques (10) sont disposés sur la circonférence de la boîte de palier (9) et reliés au bâti (3).

5. Entraînement selon revendiation 4, caractérisé en ce que les éléments élastiques (10) sont constitués par des galets en métal caoutchouté.

6. Entraînement selon l'une des revendications 1 à 5, caractérisé en ce que, entre le bâti (3) et la boîte de palier (9), il sont prévus des éléments de type ressort (11) créant une force de une résistance envers la déviation radiale du palier inférieur (5).

7. Entraînement selon revendication 6, caractérisé en ce que les éléments de type ressort (11) sont constitués par des galets en caoutchouc disposés dans la zone du palier supérieur (4).

8. Entraînement selon revendication 6, caractérisé en ce que les éléments de type ressort (11) sont constitués par des ressorts cylindriques disposés dans la zone du palier inférieur (5).

9. Entraînement selon l'une des revendications 1 à 8, caractérisé en ce que l'arbre de commande (2) est équipé d'un élément rotatif (12) au-dessous du palier inférieur (5), le-dit élément étant entraîné par l'arbre (2).

10. Entraînement selon revendication 9, caractérisé en ce que l'élément rotatif (12) est muni, sur sa face supérieure, d'un contour (13) produisant un effet de pompe.

11. Entraînement selon l'une des revendications 2 à 10, caractérisé en ce que la boîte de palier est pourvue d'au moins un canal f'écoulement (14) et d'un canal d'entrée (15) reliés au bain d'huile (8).
